(19)

Europäisches
Patentamt
European
Patent Office
Office européen
des brevets

(11) **EP 2 320 255 A2**

(12) **EUROPEAN PATENT APPLICATION**

(43) Date of publication:
**11.05.2011 Bulletin 2011/19**

(51) Int Cl.:
**G02B 6/00** (2006.01)

(21) Application number: **10189792.4**

(22) Date of filing: **03.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.11.2009 US 590210**

(71) Applicant: **SKC Haas Display Films Co., Ltd.
Choongchungnamdo (KR)**

(72) Inventors:
• **Mi, Xiang-Dong
Rochester, NY 14623 (US)**
• **Zhu, Xinyu
New York, NY 14623 (US)**
• **Greener, Jehuda
New York, NY 14618 (US)**

(74) Representative: **Buckley, Guy Julian
Patent Outsourcing Limited
1 King Street
Bakewell
Derbyshire DE45 1DZ (GB)**

(54) **Novel turning film for liquid crystal displays**

(57) The present invention provides a light redirecting article for redirecting light toward a target angle, the light redirecting article comprising: an input surface comprising a plurality of light redirecting structures. Each light redirecting structure has (i) a near surface having two slopes, sloping away from normal in one direction as defined by a first inclination base angle $\beta_1$, a second inclination angle $\beta_2$, and a first half apex angle $\alpha_2$, for accepting incident illumination over a range of incident angles and (ii) a far surface sloping away from normal, in the opposite direction relative to the input surface, as defined by a second base angle $\gamma_1$ and a second half apex angle $\alpha_1$. In addition, light redirecting structures has (b) an output surface opposing to the input surface, wherein the near and far surfaces are opposed to each other at an angle $(\alpha_1+\alpha_2)$, and the base angle $\beta_1$ is greater than or equal to 90 degrees.

FIG. 3

EP 2 320 255 A2

**Description**

**FIELD OF THE INVENTION**

This invention generally relates to display illumination articles for enhancing luminance from a surface and more particularly relates to a turning film having multiple slopes that redirects light from a light guiding plate.

**BACKGROUND OF THE INVENTION**

Liquid crystal displays (LCDs) continue to improve in cost and performance, becoming a preferred display type for many computer, instrumentation, and entertainment applications. The transmissive LCD used in conventional laptop computer displays is a type of backlit display, having a light providing surface positioned behind the LCD for directing light outwards, towards the LCD. The challenge of providing a suitable backlight apparatus having brightness that is sufficiently uniform while remaining compact and low cost has been addressed following one of two basic approaches. In the first approach, a light-providing surface is used to provide a highly scattered, essentially Lambertian light distribution, having an essentially constant luminance over a broad range of angles. Following this first approach, with the goal of increasing on-axis and near-axis luminance, a number of brightness enhancement films have been proposed for redirecting a portion of this light having Lambertian distribution in order to provide a more collimated illumination.

A second approach to providing backlight illumination employs a light guiding plate (LGP) that accepts incident light from a lamp or other light source disposed at the side and guides this light internally using Total Internal Reflection (TIR) so that light is emitted from the LGP over a narrow range of angles. The output light from the LGP is typically at a fairly steep angle with respect to normal, such as 70 degrees or more. With this second approach, a turning film, one type of light redirecting article, is then used to redirect the emitted light output from the LGP toward normal. Directional turning films, broadly termed light-redirecting articles or light-redirecting films, such as that provided with the HSOT (Highly Scattering Optical Transmission) light guide panel available from Clarex, Inc., Baldwin, NY, provide an improved solution for providing a uniform backlight of this type, without the need for diffusion films or for dot printing in manufacture. HSOT light guide panels and other types of directional turning films use arrays of prism structures, in various combinations, to redirect light from a light guiding plate toward normal, or toward some other suitable target angle that is typically near normal relative to the two-dimensional surface. As one example, U.S. Patent No. 6,746,130 (Ohkawa) describes a light control sheet that acts as a turning film for LGP illumination.

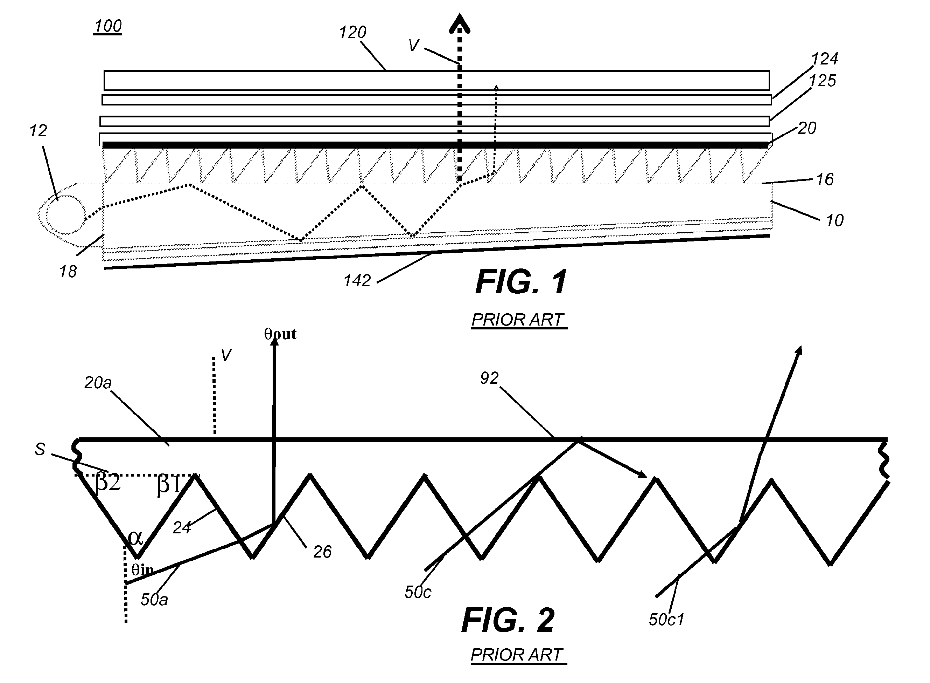

Referring to Figure 1, the overall function of a light guiding plate 10 in a display apparatus 100 is shown. Light from a light source 12 is incident at an input surface 18 and passes into light guiding plate 10, which is typically wedge-shaped as shown. The light propagates within light guiding plate 10 until Total Internal Reflection (TIR) conditions are frustrated and then, possibly reflected from a reflective surface 142, exits light guiding plate at an output surface 16. This light then goes to a turning film 20 and is directed to illuminate a light-gating device 120 such as an LCD or other type of spatial light modulator or other two-dimensional backlit component that modulates the light. For optimized viewing under most conditions, the emitted light should be provided over a range of relatively narrow angles about a normal V. A polarizer 124 is typically disposed in the illumination path in order to provide light-gating device 120 such as a liquid crystal cell with suitably polarized light for modulation. A reflective polarizer 125 may be provided between absorptive polarizer 124 and turning film 20.

Referring to Figure 2, there is shown a schematic cross-sectional view of a conventional turning film 20a used with light guiding plate 10, showing key angles and geometric relationships. Turning film 20a has a number of prismatic structures facing downward toward light guiding plate 10, each structure having a near surface 24 (being near relative to light source 12, as shown in the embodiment of Figure 1) and a far surface 26, both sides slanted from a film normal direction V as determined by an apex angle $\alpha$, and base angles $\beta1$ and $\beta2$, relative to a horizontal S. Light from light guiding plate 10 is incident over a small range of angles about a central input angle $\theta_{in}$. The output angle $\theta_{out}$ of light delivered to the LC display element is determined by a number of factors including the central input angle $\theta_{in}$, the refractive index n of turning film 20a, and the base angle $\beta1$ at which far surface 26 is slanted. Output angle $\theta_{out}$ for emitted light is preferably normal with respect to turning film 20a, however output angle $\theta_{out}$ can be considered a target angle, which may be at some inclination with respect to normal for some applications. For most conventional turning films, the target angle is near normal. In a typical arrangement, base angles $\beta1$ and $\beta2$ are about 56 degrees, and apex angle $\alpha$, 68 degrees. The primary (or principal) ray 50a having an input angle around $\theta_{in} \approx 70°$ is redirected to near normal direction. However, some secondary rays 50c, 50cl having an input angle around $\theta_{in} < 70°$ may take paths as shown in Figure 2. Secondary ray 50cl is redirected toward a relative large angle from the normal direction. Further, secondary ray 50c is totally reflected back by the light exiting surface 92. Consequently, the light utilization of this existing turning film is not satisfactory.

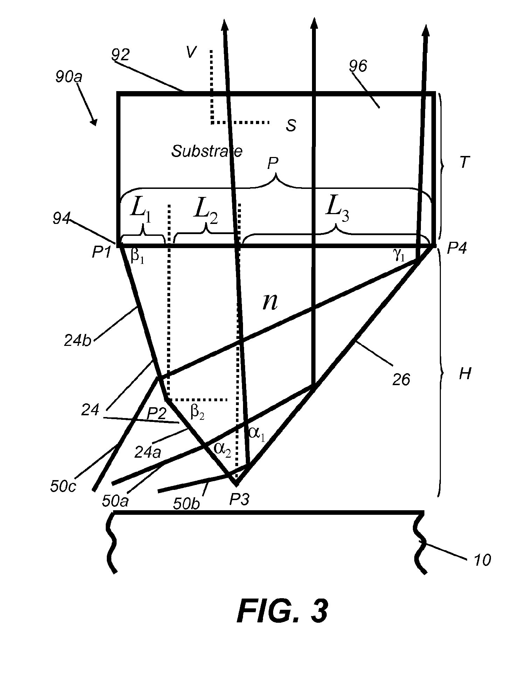

Referring to Figure 3, there is shown a schematic cross-sectional view of an improved turning film 90a having multiple slopes. The turning film 90a, while improving the light utilization, has base angle $\beta1$ generally less than 90°.

Moreover, during the manufacture of the turning film 90a, it may be difficult to precisely control the base angle β1 due to the asymmetry of the turning film 90a. Thus, while there have been solutions proposed for turning films suitable for some types of display apparatus and applications, there remains a need for improved turning films.

## SUMMARY OF THE INVENTION

The present invention provides a light redirecting article for redirecting light toward a target angle, the light redirecting article comprising: (a) an input surface comprising a plurality of light redirecting structures each light redirecting structure having: (i) a near surface having two slopes, sloping away from normal in one direction as defined by a first inclination base angle $\beta_1$, a second inclination angle $\beta_2$, and a first half apex angle $\alpha_2$, for accepting incident illumination over a range of incident angles; (ii) a far surface sloping away from normal, in the opposite direction relative to the input surface, as defined by a second base angle $\gamma_1$ and a second half apex angle $\alpha_1$; and (b) an output surface opposing to the input surface, wherein the near and far surfaces are opposed to each other at an angle $(\alpha_1+\alpha_2)$, and the base angle $\beta_1$ is greater than or equal to 90 degrees.

The present invention also provides a light redirecting article for redirecting light toward a target angle, the light redirecting article comprising: (a) an input surface comprising a plurality of light redirecting structures, each light redirecting structure having: (i) a near surface having two slopes, sloping away from normal in one direction as defined by a first inclination base angle $\beta_1$, a second inclination angle $\beta_2$, and a first half apex angle $\beta_2$, for accepting incident illumination over a range of incident angles; (ii) a far surface sloping away from normal, in the opposite direction relative to the input surface, as defined by a second base angle $\gamma_1$ and a second half apex angle $\alpha_1$; and (b) an output surface opposing to the input surface, wherein the near and far surfaces are opposed to each other at an angle $(\alpha_1+\alpha_2)$, two neighboring light redirecting structures have a gap G and a pitch P, and G/P is in the range of between about 0.08 and 0.12.

## BRIEF DESCRIPTION OF THE DRAWINGS

Figure 1 is a cross sectional view showing components of a conventional display apparatus;
Figure 2 is a schematic cross-sectional view showing a turning film with prismatic structure facing downward, toward the light guiding plate;
Figure 3 is a schematic cross-sectional view showing a single unit of a prior turning film having two slopes on the near surface of the prismatic structures with a base angle less than 90°;
Figure 4A is a schematic cross-sectional view showing two units of a turning film having a base angle equal to or greater than 90° according to the present invention;
Figure 4B is a schematic cross-sectional view showing two unit of a turning film having a gap G according to the present invention;
Figure 5 is a schematic cross-sectional view showing a turning film of the present invention in an LCD display system;
Figure 6A is a schematic top view showing an LCD with a pair of polarizers oriented at 45 degrees relative to the grooves of the light redirecting structure of the turning film;
Figure 6B is a schematic top view showing an LCD with a pair of polarizers oriented at parallel or perpendicular to the grooves of the light redirecting structure of the turning film; and
Figure 6C is a schematic top view showing a turning film with arcuate grooves.

## DETAILED DESCRIPTION OF THE INVENTION

The apparatus of the present invention uses light-redirecting structures that are generally shaped as prisms. True prisms have at least two planar faces. Because, however, one or more surfaces of the light-redirecting structures need not be planar in all embodiments, but may be curved or have multiple sections, the more general term "light redirecting structure" is used in this specification.

Figure 3 shows one unit of a turning film 90a, which comprises a substrate 96 having a light inputting surface 94 and a light exiting surface 92. On the side of the light inputting surface 94 of the film 90a is a prismatic structure which is described by points P1, P2, P3, and P4 and characterized by a near surface 24 and a far surface 26, and the near surface is composed of at least first flat segment 24a and second flat segment 24b, the angle $\beta_2$ between the first segment 24a and the horizontal direction S is smaller than the angle $\beta_1$ between the second segment 24b and the horizontal direction S. The prismatic structure can be further described by two half apex angles $\alpha_1$ and $\alpha_2$, the pitch P and height H, and three projection dimensions $L_1, L_2,$ and $L_3$. The prismatic structure is made of a material of refractive index n, and the substrate may have its index of refraction greater than, equal to, or less than $n$. The shape and the refractive index $n$ of the prismatic structure are chosen so that the primary ray 50a from the light guide plate 10, secondary ray 50b having larger incident angle than the primary ray 50a, and secondary ray 50c having smaller incident angle than the primary ray 50a are characterized as following: the primary ray 50a is refracted by the first segment 24a of the near surface 24, subsequently reflected due to the total internal reflection at the far surface 26, and finally emerges out toward the target angle (normally within 5 degrees from the normal of the film); the secondary ray 50b is also refracted by the first segment 24a of the near surface 24, subsequently reflected due to the total internal reflection at the far surface 26, and finally emerges out in a direction that is bent more from its original direction than the primary ray 50a; and the secondary ray 50c is refracted by the second segment 24b of the near surface 24, subsequently reflected due to the total internal reflection at the far surface 26, and finally emerges out in a direction that is closer to the target direction than it would if the second segment 24b has the same slope as the first segment 24a.

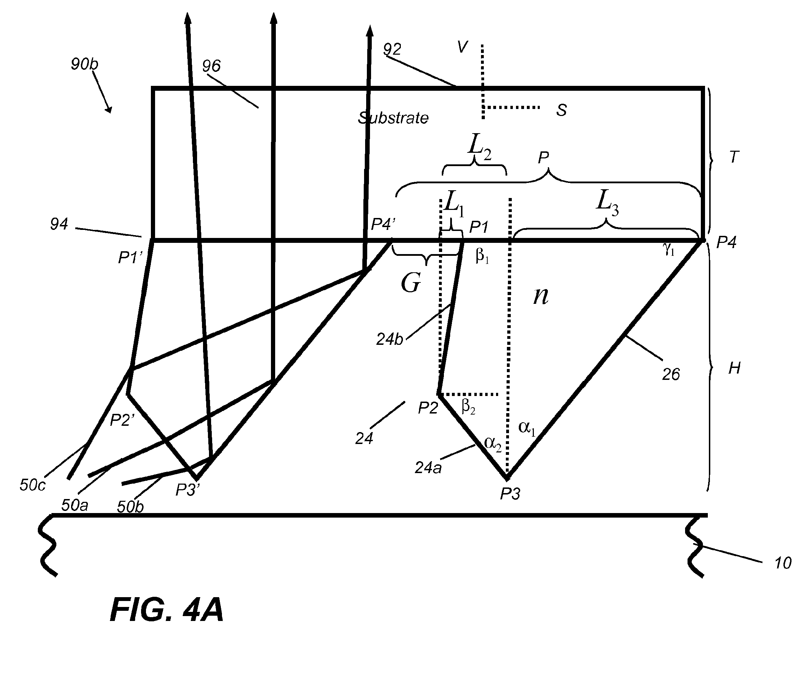

Figure 4A shows two neighboring units of a turning film 90b according to the present invention, which comprises a substrate 96 having a light inputting surface 94 and a light exiting surface 92. On the side of the light inputting surface 94 of the film 90b is a prismatic structure which is described by points P1, P2, P3, and P4 for one unit and points P1', P2', P3', and P4' for another unit, and characterized by a near surface 24 and a far surface 26, and the near surface is composed of at least first flat segment 24a and second flat segment 24b, the angle $\beta_2$ between the first segment 24a and the horizontal direction S is smaller than the angle $\beta_1$ between the second segment 24b and the horizontal direction S. The prismatic structure can be further described by two half apex angles $\alpha_1$ and $\alpha_2$, the pitch P and height H, and three projection dimensions $L_1$, $L_2$, and $L_3$. The prismatic structure is made of a material of refractive index n, and the substrate may have its index of refraction greater than, equal to, or less than n. The shape and the refractive index n of the prismatic structure are chosen so that the primary ray 50a from the light guide plate 10, secondary ray 50b having larger incident angle than the primary ray, and secondary ray 50c having smaller incident angle than the primary ray have similar characteristics as the turning film 90a shown in Figure 3.

According to one aspect of the present invention, the improved turning film 90b has a near based angle $\beta_1 \geq$ 90°. Note that in Figure 4A, the based angle $\beta_1$ is sharp, but it can also be rounded, meaning that there may be a curvature near Points P1' and P1.

According to another aspect of the present invention, the improved turning film 90b has a gap G between the base points P4', P1 of two neighboring prisms. As a result, projection dimension $L_1$ is negative as it is the difference between the projected coordinates onto the horizontal direction S of two neighboring points of one prism, while keeping $L_1/P + L_2/P + L_3/P = 1$.

Inventive (denoted as "I") and comparative examples (denoted as "C") of turning film 90b are shown in Table 1 - Table 2. In all of these examples, refractive index n is held constant at 1.5, and pitch P of the prisms is about 50 $\mu$m, though it can be in the range of 15 to 150 $\mu$m, preferably in the range of 20 to 75 $\mu$m, more preferably in the range of 25 to 50 $\mu$m. When n and P are held constant, there are 4 independent parameters to specify the shape of turning film 90b, which are chosen to be $L_1/P$, $L_2/P$, $\beta_1$, and $\beta_2$. The height H and angles can be calculated as

$$H = P[l_1 \tan(\beta_1) + l_2 \tan(\beta_2)],$$

$$\alpha_1 = \tan^{-1}(\frac{1 - l_1 - l_2}{h}),$$

$$\alpha_2 = 90° - \beta_2$$

$$\alpha \equiv \alpha_1 + \alpha_2$$

$$\gamma_1 = 90° - \alpha_1,$$

where $l_1 \equiv \dfrac{L_1}{P}$, $l_2 \equiv \dfrac{L_2}{P}$, $h \equiv \dfrac{H}{P}$.

When $\alpha_1 = \alpha_2$, it follows $l_2 = \dfrac{1-l_1}{2} - \dfrac{l_1}{2}\dfrac{\tan(\beta_1)}{\tan(\beta_2)}$, or $l_1 = \dfrac{1-2l_2}{1+\dfrac{\tan(\beta_1)}{\tan(\beta_2)}}$.

Consistent with the above discussion, when $\beta_1 = 90°$, $l_1 \equiv \dfrac{L_1}{P} = 0$; and when $\beta_1 \geq 90°$, $l_1 \equiv \dfrac{L_1}{P} < 0$.

In Table 1-2, Columns $L_1/P$, $\beta_1$, and $\beta_2$ are independent parameters. $L_2/P$ is chosen to be

$L_2/P = l_2 = \dfrac{1-l_1}{2} - \dfrac{l_1}{2}\dfrac{\tan(\beta_1)}{\tan(\beta_2)}$ to ensure $\alpha1 = \alpha2 = 90°-\beta_2$, and $\alpha \equiv 2\alpha_1$. The four right most columns represent the output of turning film in terms of total power, maximum intensity ratio, maximum intensity angle, and on-axis intensity ratio. The turning film of the present invention has: Power ≥ 85%, Maximum intensity ratio ≥ 1.1 and Maximum intensity angle is within -5° and -5°.

Table 1 summarizes impact of $\beta_1$ and G/P when $\beta_1 \geq 90°$.

| Ex | $L_1/P$ | $L_2/P$ | $\beta_1$ (°) | G/P | Power | Maximum Intensity Ratio | Maximum Intensity angle (°) | On-axis Intensity ratio |
|---|---|---|---|---|---|---|---|---|
| C1.1 | -0.36029 | 0.25498 | 105.9 | 0.32 | 0.870 | 0.810 | 3.5 | 0.699 |
| C1.2 | -0.32143 | 0.24770 | 104.7 | 0.3 | 0.881 | 0.859 | 1.5 | 0.766 |
| C1.3 | -0.28472 | 0.24082 | 103.4 | 0.28 | 0.888 | 0.937 | 2.5 | 0.846 |
| C1.4 | -0.25000 | 0.23431 | 102.2 | 0.26 | 0.893 | 0.990 | 1.5 | 0.950 |
| C1.5 | -0.21711 | 0.22814 | 100.9 | 0.24 | 0.895 | 1.013 | 0.5 | 1.012 |
| C1.6 | -0.18590 | 0.22229 | 99.6 | 0.22 | 0.896 | 1.066 | -0.5 | 1.046 |
| C1.7 | -0.15625 | 0.21673 | 98.3 | 0.2 | 0.895 | 1.081 | -0.5 | 1.080 |
| I1.1 | -0.12805 | 0.21145 | 97.0 | 0.18 | 0.895 | 1.114 | 0.5 | 1.105 |
| I1.2 | -0.10119 | 0.20641 | 95.7 | 0.16 | 0.895 | 1.124 | 1.5 | 1.110 |
| I1.3 | -0.07558 | 0.20161 | 94.3 | 0.14 | 0.894 | 1.129 | 1.5 | 1.117 |
| I1.4 | -0.05114 | 0.19703 | 93.0 | 0.12 | 0.894 | 1.157 | 1.5 | 1.132 |
| I1.5 | -0.02778 | 0.19265 | 91.7 | 0.1 | 0.894 | 1.157 | 1.5 | 1.137 |
| I1.6 | -0.00543 | 0.18846 | 90.3 | 0.08 | 0.893 | 1.167 | 1.5 | 1.146 |
| C1.8 | 0.01596 | 0.18445 | 89.0 | 0.06 | 0.893 | 1.189 | 1.5 | 1.157 |
| C1.9 | 0.03646 | 0.18061 | 87.7 | 0.04 | 0.892 | 1.173 | 1.5 | 1.134 |
| C1.10 | 0.05612 | 0.17693 | 86.3 | 0.02 | 0.892 | 1.168 | 1.5 | 1.161 |
| C1.11 | 0.07500 | 0.17339 | 85.0 | 0 | 0.892 | 1.196 | 1.5 | 1.155 |

In Table 1, Ex. C1.1 -C1.7, C1.8-C.11 and I1.1-I1.6 show the impact of $\beta_1$, $L_1/P$, $L_2/P$, and Gap/P, given $\alpha_1 = \alpha_2 = \alpha = 34°$, and $\beta_2 = 56°$. Turning films of inventive examples I1.1 through I1.6 all have $\beta_1 \geq 90°$ and meet the criteria: high power (>0.88), large maximum peak intensity ratio (≥1.10), and small maximum intensity angle from the normal (≤ ±5°). When $\beta_1$ is out of the preferred range between 90° and 98°, or Gap/P is out of the preferred range of between 0.19 and 0.07, the outputs from comparative examples C1.1 - C1.7 do not meet all of the criteria, in terms of power (>0.85), maximum intensity ratio (≥1.10), and maximum intensity angle (≤ ±5°), indicating inferior performance.

Compared to comparative examples C1.8-C1.11 which have either G/P = 0, or G/P out of the preferred range, the present invention of examples I1.1 -I1.6 may be easier for manufacturing due to the existence of the gap between the base points P4, P4' (or P1, P1') of two neighboring prisms, and/or the base angle $\beta_1 \geq 90°$.

Table 2 summarizes impact of G/P when $\beta_1 \geq 90°$

| Ex | G/P | Power | Maximum Intensity Ratio | Maximum Intensity angle (°) | On-axis Intensity ratio |
|---|---|---|---|---|---|
| I2.1 | 0.00000 | 0.899 | 1.119 | 2.5 | 1.062 |

(continued)

| Ex | G/P | Power | Maximum Intensity Ratio | Maximum Intensity angle (°) | On-axis Intensity ratio |
|---|---|---|---|---|---|
| I2.2 | 0.01961 | 0.899 | 1.112 | 1.5 | 1.073 |
| I2.3 | 0.03846 | 0.898 | 1.107 | 3.5 | 1.061 |
| I2.4 | 0.05660 | 0.897 | 1.130 | 1.5 | 1.061 |
| I2.5 | 0.07407 | 0.897 | 1.137 | 1.5 | 1.090 |
| I2.6 | 0.09091 | 0.897 | 1.154 | 2.5 | 1.108 |
| I2.7 | 0.10714 | 0.895 | 1.153 | 2.5 | 1.110 |
| I2.8 | 0.12281 | 0.897 | 1.154 | 0.5 | 1.133 |
| I2.9 | 0.13793 | 0.894 | 1.131 | 1.5 | 1.095 |
| I2.10 | 0.15254 | 0.896 | 1.121 | 1.5 | 1.108 |
| I2.11 | 0.16667 | 0.894 | 1.112 | 0.5 | 1.101 |
| I2.12 | 0.18033 | 0.895 | 1.131 | 1.5 | 1.118 |
| I2.13 | 0.19355 | 0.895 | 1.129 | -0.5 | 1.125 |
| I2.14 | 0.20635 | 0.894 | 1.144 | 0.5 | 1.128 |
| I2.15 | 0.21875 | 0.893 | 1.133 | -0.5 | 1.125 |
| I2.16 | 0.23077 | 0.893 | 1.115 | -0.5 | 1.093 |
| I2.17 | 0.24242 | 0.893 | 1.118 | -0.5 | 1.095 |
| C2.1 | 0.25373 | 0.894 | 1.090 | -0.5 | 1.063 |
| C2.2 | 0.26471 | 0.894 | 1.093 | -1.5 | 1.045 |
| C2.3 | 0.27536 | 0.893 | 1.089 | -1.5 | 1.059 |
| C2.4 | 0.28571 | 0.893 | 1.086 | -2.5 | 1.016 |

Table 2 shows the impact of G/P when the other parameters are kept constant; $L_1/(P-G)$ = -0.10119, $L_2/(P-G)$ = 0.20641, $\beta_1$ = 95.7°, $\beta_2$ = 56°, $\alpha_1 = \alpha_2 = \alpha$ = 34°, and n = 1.5. The shape of the prisms specified by those parameters is identical to example I1.2 in Table 1.

Turning films of inventive examples I2.1 - 12.17 meet the criteria: high power (>0.88), large maximum peak intensity ratio ($\geq$1.10), and small maximum intensity angle from the normal ($\leq \pm$5°), while comparative examples C2.1 - C2.4 do not. Note that the maximum intensity ratio first decreases with G/P, then increases with G/P. The maximum intensity ratio reaches a local maximum value of about 1.15 when G/P is in the range of between about 0.08 and 0.12. As G/P further increases, the maximum intensity ratio decreases and then increases to a second local maximum value of about 1.14 when G/P is about 0.21. When G/P is greater than about 0.25, the maximum intensity ratio becomes below than 1.10, as shown in examples C2.1 - C2.4.

Thus, Table 2 shows a turning film according to the present invention having a selective G/P ratio to maximize the maximum intensity ratio while allowing easy manufacture.

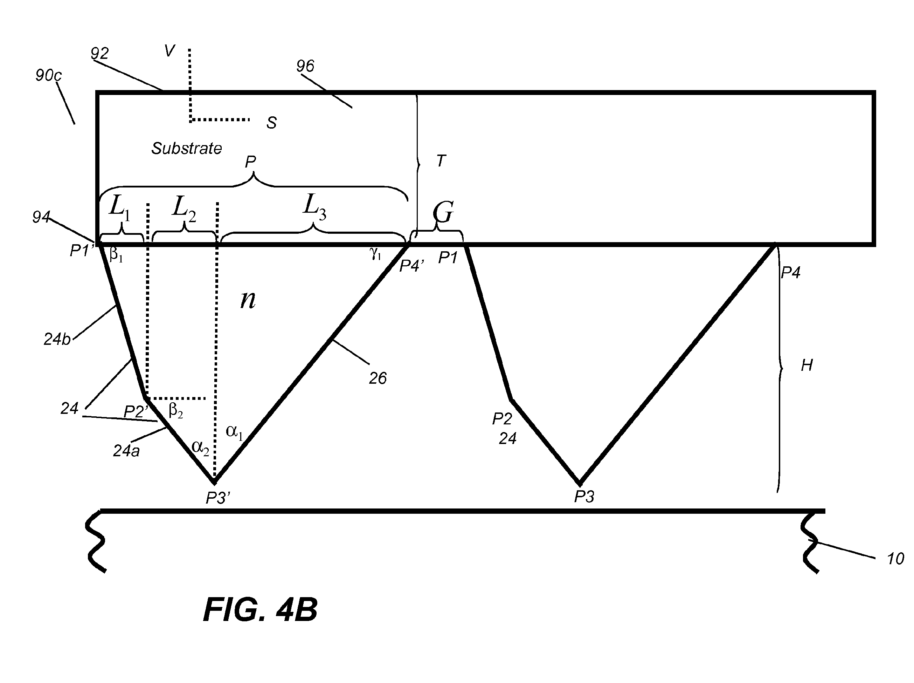

Though the preferred G/P range of between about 0.08 and 0.12 is found for a turning film 90b having a base angle $\beta_1 \geq$ 90°, applicants find that this G/P range also works well for a turning film 90c having a base angle $\beta_1 <$ 90°. Figure 4B is a schematic cross-sectional view showing two neighboring units of a turning film 90c having two slopes on the near surface of the prismatic structures and the based angle $\beta_1 <$ 90° and a gap G according to the present invention. Like parts in Figures 3, 4A and 4B are designated by the same parts number.

Table 3 summarizes impact of G/P when $\beta_1<$90°.

| Ex | G/P | Power | Maximum Intensity Ratio | Maximum Intensity angle (°) | On-axis Intensity ratio |
|---|---|---|---|---|---|
| I3.1 | 0.0099 | 0.892 | 1.204 | 0.5 | 1.177 |
| I3.2 | 0.0291 | 0.891 | 1.173 | 1.5 | 1.165 |
| I3.3 | 0.0476 | 0.889 | 1.185 | 1.5 | 1.169 |
| I3.4 | 0.0654 | 0.890 | 1.178 | 0.5 | 1.175 |
| I3.5 | 0.0826 | 0.889 | 1.189 | -0.5 | 1.175 |
| I3.6 | 0.0991 | 0.888 | 1.172 | -0.5 | 1.162 |
| I3.7 | 0.1071 | 0.888 | 1.199 | 0.5 | 1.193 |
| I3.8 | 0.1150 | 0.888 | 1.179 | -0.5 | 1.170 |
| I3.9 | 0.1228 | 0.887 | 1.188 | -1.5 | 1.182 |
| I3.10 | 0.1379 | 0.886 | 1.153 | -1.5 | 1.134 |
| I3.11 | 0.1453 | 0.887 | 1.158 | -0.5 | 1.147 |

(continued)

| Ex | G/P | Power | Maximum Intensity Ratio | Maximum Intensity angle (°) | On-axis Intensity ratio |
|---|---|---|---|---|---|
| I3.12 | 0.1525 | 0.886 | 1.168 | -1.5 | 1.124 |
| I3.13 | 0.1597 | 0.885 | 1.165 | -1.5 | 1.120 |
| I3.14 | 0.1667 | 0.886 | 1.166 | -1.5 | 1.116 |
| I3.15 | 0.1736 | 0.887 | 1.169 | -1.5 | 1.109 |
| I3.16 | 0.1803 | 0.886 | 1.162 | -1.5 | 1.123 |
| I3.17 | 0.1870 | 0.885 | 1.148 | -1.5 | 1.127 |
| I3.18 | 0.1935 | 0.886 | 1.141 | -2.5 | 1.105 |
| I3.19 | 0.2000 | 0.884 | 1.130 | -0.5 | 1.120 |
| I3.20 | 0.2063 | 0.885 | 1.170 | -2.5 | 1.100 |
| I3.21 | 0.2126 | 0.886 | 1.140 | -1.5 | 1.119 |
| I3.22 | 0.2188 | 0.884 | 1.140 | -2.5 | 1.084 |
| I3.23 | 0.2248 | 0.885 | 1.114 | -2.5 | 1.064 |
| I3.24 | 0.2308 | 0.884 | 1.157 | -2.5 | 1.105 |
| I3.25 | 0.2366 | 0.884 | 1.128 | -2.5 | 1.066 |
| I3.26 | 0.2424 | 0.885 | 1.147 | -2.5 | 1.045 |
| I3.27 | 0.2481 | 0.882 | 1.134 | -1.5 | 1.072 |
| I3.28 | 0.2537 | 0.885 | 1.160 | -2.5 | 1.073 |
| I3.29 | 0.2593 | 0.882 | 1.118 | -2.5 | 1.075 |
| I3.30 | 0.2647 | 0.885 | 1.130 | -2.5 | 1.080 |
| I3.31 | 0.2701 | 0.883 | 1.143 | -2.5 | 1.096 |
| I3.32 | 0.2754 | 0.884 | 1.116 | -3.5 | 1.063 |
| I3.33 | 0.2857 | 0.885 | 1.113 | -1.5 | 1.037 |
| I3.34 | 0.2908 | 0.883 | 1.115 | -2.5 | 1.035 |
| I3.35 | 0.2958 | 0.885 | 1.112 | -2.5 | 1.066 |
| I3.36 | 0.3007 | 0.883 | 1.110 | -3.5 | 1.045 |
| C3.1 | 0.3056 | 0.885 | 1.098 | -1.5 | 1.016 |
| C3.2 | 0.3377 | 0.882 | 1.077 | -2.5 | 0.989 |
| C3.3 | 0.3421 | 0.883 | 1.096 | -2.5 | 0.978 |
| C3.4 | 0.4737 | 0.881 | 1.002 | -6.5 | 0.788 |

Table 3 shows the impact of G/P when the other parameters are kept constant; $L_1/(P-G) = 0.077$, $L_2/(P-G) = 0.16633$, $\beta_1 = 85°$, $\beta_2$ 56°, $\alpha_1 = \alpha_2 = \alpha = 34°$, and n=1.5. The shape of the prism specified by $L_1/(P-G) = 0.077$, $L_2/(P-G) = 0.16633$, $\beta_1 = 85°$, $\beta_2 = 56°$, $\alpha_1 = \alpha_2 = \alpha = 34°$, and n=1.5.

The inventive examples I3.1 -I3.36 meet the criteria: high power (>0.88), large maximum peak intensity ratio ($\geq 1.10$), and small maximum intensity angle from the normal ($\leq \pm 5°$). When the ratio of gap over the pitch G/P is out of the preferred range of between 0 and 0.3, the outputs from comparative examples C3.1 - C3.4 do not meet all of the criteria, in terms of power (>0.85), maximum intensity ratio ($\geq 1.10$), and maximum intensity angle ($\leq \pm 5°$), indicating inferior performance.

Examples I3.3 -I3.9 in Table 3 also show a more preferred range for G/P is between 0.08 and 0.12. In this range, the turning film of the present invention is easy to fabricate, and also has reasonably good optical performance as shown by the large maximum peak intensity ratio greater than 1.17.

Display Apparatus and Orientation of Polarizers

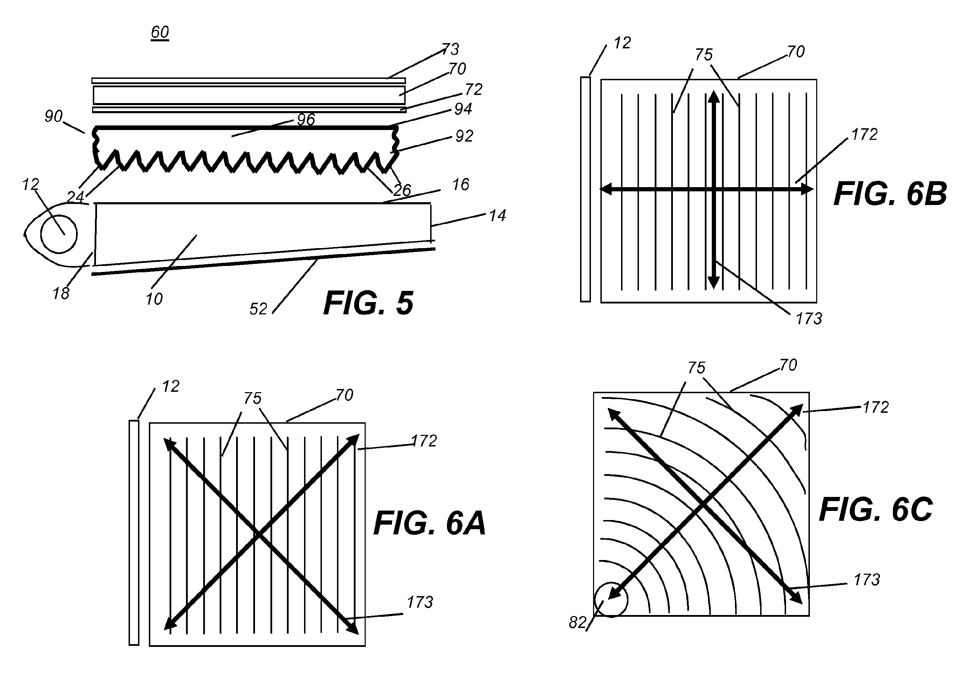

The apparatus and method of the present invention allow a number of possible configurations for support components to provide light for an LCD. Figure 5 is a schematic cross-sectional view showing a display apparatus 60 using turning film 90, which can be 90b or 90c according to the present invention. An LC spatial light modulator 70 modulates light received from light guiding plate 10 and turning film 90. A back polarizer 72 and a front polarizer 73 are provided for LC spatial light modulator 70.

Figure 6A is a schematic top view showing polarized light transmission axes 172 and 173 for LC spatial light modulator 70, using a pair of polarizers that are oriented at 45 degrees relative to light redirecting structures 75 and grooves of turning film 90 that extend vertically in the view of Figure 6A. In this case, the LC spatial light modulator 70 can be a twisted nematic (TN) LCD, which is the dominant mode used in a notebook and monitor display.

Figure 6B is a schematic top view showing polarized light transmission axes 172 and 173 for LC spatial light modulator 70, using a pair of polarizers oriented at parallel or perpendicular relative to the grooves and light redirecting structures 75 of turning film 90. In this case, the LC spatial light modulator 70 can use vertically aligned (VA) LCD or IPS LC elements. Rear polarizer transmission axis 172 is parallel to the plane of the cross section.

In one embodiment the display apparatus comprises a pair of crossed polarizers, wherein the light redirecting structures are elongated in an elongation direction and wherein each of the crossed polarizers is oriented either substantially parallel or perpendicular to the elongation direction of the light redirecting article. In another embodiment the display apparatus comprises a pair of crossed polarizers, wherein the light redirecting structures are elongated in an elongation direction and wherein the polarizers are substantially oriented at +/-45 degrees relative to the elongation direction of the light redirecting article.

Figure 6C is a schematic top view showing turning film 90 with arcuately elongated light redirecting structures 75 in another embodiment. This arrangement is advantageous for employing a point light source such as Light Emitting Diode (LED) at one or more corners of light guiding plate 10 in order to have a more compact design. The rear polarizer transmission axis 172 is more or less parallel to the plane of the cross section.

Materials for Forming Turning Film

Turning film 90b-90c of the present invention can be fabricated using polymeric materials having indices of refraction ranging typically from about 1.40 to about 1.66. Possible polymer compositions include, but are not limited to: poly(methyl methacrylate)s, poly(cyclo olefin)s, polycarbonates, polysulfones and various co-polymers comprising various combinations of acrylate, alicyclic acrylate, carbonate, styrenic, sulfone and other moieties that are known to impart desirable optical properties, particularly high transmittance in the visible range and low level of haze. Various miscible blends of the aforementioned polymers are also possible material combinations that can be used in the present invention. The polymer compositions may be either thermoplastic or thermosetting. The former are manufacturable by an appropriate melt process that requires good melt processability while the latter can be fabricated by an appropriate UV cast and cure process or a thermal cure process.

Turning film 90b-90c of the present invention may be fabricated using materials having an index of refraction in the range of 1.12 and 1.40. Example materials are inorganic materials, for example, MgF. Also, materials having a grating formed between a common polymeric material having refractive index in the range of 1.48 and 1.59 and air (n=1). Further, a mix of low index materials (n < 1.4) and materials having indices of refraction from about 1.40 to 1.50 may be used as well.

Maximum Intensity Ratio (or Optical Gain), Maximum Intensity Angle (or Peak Angle), and Power of a Turning Film

In general, light distribution is specified in terms of spatial and angular distributions. The spatial distribution of light can be made quite uniform, achieved by careful placement of micro features on top and/or bottom sides of a light guide plate. The angular distribution of light is specified in terms of luminous intensity I as a function of polar angle $\theta$ and azimuthal angle. The angular distribution of light is measured with EZ Contrast 160 (available from Eldim, France). Polar angle $\theta$ is the angle between the light direction and the normal of the light guide plate V. The azimuthal angle is the angle between the projection of the light onto a plane that is perpendicular to the normal direction V and a direction that is parallel to the length direction of the light guide plate. The length direction of the light guide plate is perpendicular to the light source 12 and the normal direction V. The angular distribution of light can also be specified in terms of luminance L as a function of polar angle $\theta$ and azimuthal angle. The luminance $L$ and the luminous intensity I are related by $L=I/cos(\theta)$.

The maximum intensity angle, also referred as peak angle of a light distribution is defined as the polar angle at which the maximum luminous intensity occurs. Each luminous intensity distribution then defines a maximum (or peak) luminous intensity and a maximum intensity (or peak) angle.

The maximum intensity ratio, also referred as optical gain, or normalized peak intensity, of a turning film, is defined as a ratio of the maximum luminous intensity of the light that is transmitted through the turning film over the maximum luminous intensity of the light that is emitted from a light guide plate. As a result, the maximum intensity ratio of a turning film is not dependent upon the absolute level of the light source, but is primarily dependent upon the turning film design itself.

The power of a turning film is the ratio of the total amount of light passing through the turning film over the total amount of light incident upon the turning film. Thus, various turning film designs can be compared in terms of two critical quantities: maximum intensity ratio (or optical gain) and maximum intensity angle of the light that is transmitted through the turning film.

**Claims**

1. A light redirecting article for redirecting light toward a target angle, the light redirecting article comprising:

   (a) an input surface comprising a plurality of light redirecting structures each light redirecting structure having:

   (i) a near surface having two slopes, sloping away from normal in one direction as defined by a first inclination base angle $\beta_1$, a second inclination angle $\beta_2$, and a first half apex angle $\alpha_2$, for accepting incident illumination over a range of incident angles;
   (ii) a far surface sloping away from normal, in the opposite direction relative to the input surface, as defined by a second base angle $\gamma_1$ and a second half apex angle $\alpha_1$; and

   (b) an output surface opposing to the input surface,

   wherein the near and far surfaces are opposed to each other at an angle ($\alpha_1 + \alpha_2$), and the base angle $\beta_1$ is greater than or equal to 90 degrees.

2. The light redirecting article of claim 1 wherein angle ($\alpha_1 + \alpha_2$) is in the range from 60 to 70 degrees.

3. The light redirecting article of claim 1 wherein the base angle $\beta_1$ is in the range from 90 to 98 degrees.

4. The light redirecting article of claim 1 wherein two neighboring light redirecting structures have a gap G and a pitch P, and G/P is in the range of between about 0.08 and 0.12.

5. A light redirecting article for redirecting light toward a target angle, the light redirecting article comprising:

   (a) an input surface comprising a plurality of light redirecting structures each light redirecting structure having:

   (i) a near surface having two slopes, sloping away from normal in one direction as defined by a first inclination base angle $\beta_1$, a second inclination angle $\beta_2$, and a first half apex angle $\beta_2$, for accepting incident illumination over a range of incident angles;
   (ii) a far surface sloping away from normal, in the opposite direction relative to the input surface, as defined by a second base angle $\gamma_1$ and a second half apex angle $\alpha_1$; and

   (b) an output surface opposing to the input surface,

   wherein the near and far surfaces are opposed to each other at an angle ($\alpha_1 + \alpha_2$), two neighboring light redirecting structures have a gap G and a pitch P, and G/P is in the range of between about 0.08 and 0.12.

6. The light redirecting article of claim 5 wherein the base angle $\beta_1$ is in the range from 90 to 98 degrees.

**FIG. 1**

*PRIOR ART*

**FIG. 2**

*PRIOR ART*

FIG. 3

FIG. 4A

**FIG. 4B**

EP 2 320 255 A2

**FIG. 5**

**FIG. 6B**

**FIG. 6A**

**FIG. 6C**

EP 2 320 255 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6746130 B, Ohkawa